# EUROPEAN PATENT APPLICATION

(11) **EP 3 107 206 A1**
(43) Date of publication of application: **21.12.2016**
(21) Application number: 15172119.8
(22) Date of filing: 15.06.2015
(51) Int. Cl.: H02S 20/25, F24J 2/46, F24J 2/00

(54) **AN ASSEMBLY OF PHOTOVOLTAIC PANELS FOR INTEGRATED INSTALLATION INTO A ROOF**

(71) Applicant: Romag Limited, Consett County, Durham DH8 7RS (GB)
(72) Inventor: The designation of the inventor has not yet been filed
(74) Representative: Vinsome, Rex Martin

(57) **Abstract**

A photovoltaic assembly (2) is described. The assembly comprises a plurality of photovoltaic converter devices (4) for receiving light and outputting electrical power, and a plurality of first fixing members (6) adapted to be attached to a first photovoltaic converter device (4) and has a respective first part (8) and a respective second part (10). The first part (8) is adapted to engage a second part (10) of a further fixing member (6) attached to a second photovoltaic converter device (4) partially overlying the first photovoltaic converter device (4), and the second part (10) is adapted to engage a first part (8) of a further first fixing member (6) attached to a third photovoltaic device (4), wherein the first photovoltaic converter device (4) partially overlies the third photovoltaic converter device (4).

## Description

The present invention relates to an assembly of photovoltaic converter devices and relates particularly, but not exclusively, to an assembly of such devices adapted for integrated installation into a roof.

Rooftop solar panels are an increasingly common sight. A solar panel is a photovoltaic device designed to convert sunlight into electrical power. Solar panels are arranged into an array and installed, using aluminium or plastic frameworks, onto the outer surfaces of roofs.

Recent solar panels are expected to have a working lifetime of at least twenty years. Since the panels and their associated framework are installed onto the exterior surface of a roof, there is considerable manual work involved with their removal when performing maintenance work on the roof. It would be advantageous therefore for solar panels to be integrated into the roofing itself to eliminate the requirement to remove the panels to maintain the roof. Additionally, parts of existing fixings for solar panels can become lost during installation, potentially reducing the safety of arrays incorporating such panels.

Preferred embodiments of the present invention seek to overcome one or more of the above disadvantages associated with the prior art.

According to the present invention, there is provided a photovoltaic assembly comprising: a plurality of photovoltaic converter devices, wherein each said photovoltaic converter device is adapted to receive light and output electrical power; and a plurality of first fixing members, wherein each said first fixing member is adapted to be attached to a first said photovoltaic converter device, and has a respective first part and a respective second part; wherein said first part is adapted to engage a said second part of a further said first fixing member attached to a second said photovoltaic converter device partially overlying said first photovoltaic converter device, and said second part is adapted to engage a said first part of a further said first fixing member attached to a third said photovoltaic device, wherein said first photovoltaic converter device partially overlies said third photovoltaic converter device.

By providing a plurality of first fixing members, wherein each said first fixing member is adapted to be attached to a first said photovoltaic converter device, and has a respective first part and a respective second part, wherein said first part is adapted to engage a said second part of a further said first fixing member attached to a second said photovoltaic converter device partially overlying said first photovoltaic converter device, and said second part is adapted to engage a said first part of a further said first fixing member attached to a third said photovoltaic device, wherein said first photovoltaic converter device partially overlies said third photovoltaic converter device, this provides the advantage of enabling first fixing members to be attached to one or more photovoltaic converter devices prior to installation, thereby reducing the risk of fixing members becoming lost during installation of the photovoltaic converter devices. In addition, the shape of the first fixing members can be arranged such that the photovoltaic converter devices can be mounted flush with adjacent roof tiles, thereby reducing trapped rainwater and wind noise.

The assembly may further comprise first barrier means for preventing passage of water between adjacent said photovoltaic converter devices.

This provides the advantage of making the assembly more weather-resistant.

The first barrier means may comprise an edge seal adapted to be secured between adjacent said photovoltaic converter devices.

This provides the advantage of improving the attachment between adjacent photovoltaic converter devices while maintaining weatherproofing.

The assembly may further comprise second barrier means for preventing passage of water between said first and second photovoltaic converter devices.

The second barrier means may comprise expanding foam tape.

The assembly may further comprise a plurality of second fixing members adapted to attach at least one said photovoltaic converter device to a support.

The assembly may further comprise draining means adapted to be attached to at least one edge of said assembly for transporting water away from said assembly.

The draining means may comprise at least one flashing tray.

A preferred embodiment of the invention will now be described, by way of example only and not in any limitative sense, with reference to the accompanying drawings, in which:-
Figure 1 is a perspective cutaway view of a photovoltaic assembly embodying the present invention;
Figure 2(a) is a perspective view of the assembly of Figure 1 showing an edge seal;
Figure 2(b) is a detailed view of an edge seal of the assembly of Figure 2;
Figure 2(c) is a detailed view of the edge seal of Figure 2(b) being fitted between adjacent photovoltaic converter devices;
Figure 3(a) is a side view of flashing and expanding foam tape of the assembly of Figure 1;
Figure 3(b) is a perspective view of the flashing and expanding foam tape of Figure 3(a);
Figure 4(a) is a side view of flashing of the assembly of Figure 1;
Figure 4(b) is a perspective view of the flashing of Figure 4(a);
Figure 5(a) is a side view of a photovoltaic converter device of the assembly of Figure 1 secured to an upper portion of the roof;
Figure 5(b) is a perspective view of the photovoltaic converter device of Figure 5(a).
Figure 6 is a perspective view of the fully installed assembly of Figure 1; and
Figure 7 is a perspective view of a series of flashing trays of the assembly of Figure 1.

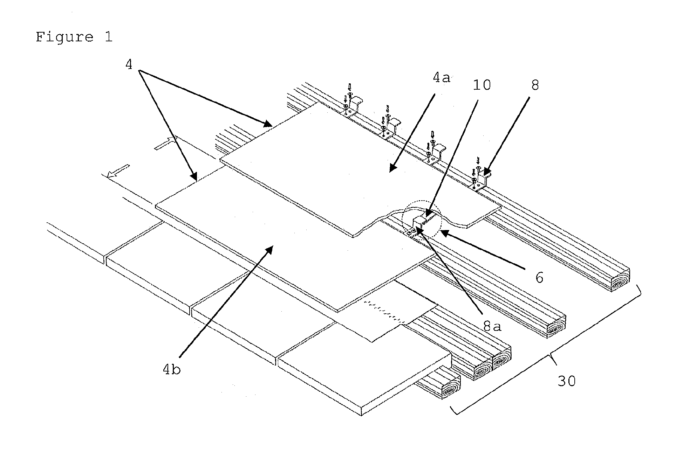

Referring to Figure 1, two photovoltaic converter devices 4 are shown secured to each other by first fixing members 6 and to battens 30 of a roof by second fixing members 8. Each first fixing member comprises a respective first part 8 and respective second part 10. In Figure 1, the first part 8 of a first device 4a engages with a second part of a second device (not shown) overlying the first device 4a, while the second part 10 of the first device 4a engages with a first part 8a of a third device 4b. In this way, a column of overlying devices, of any length, can be assembled and installed.

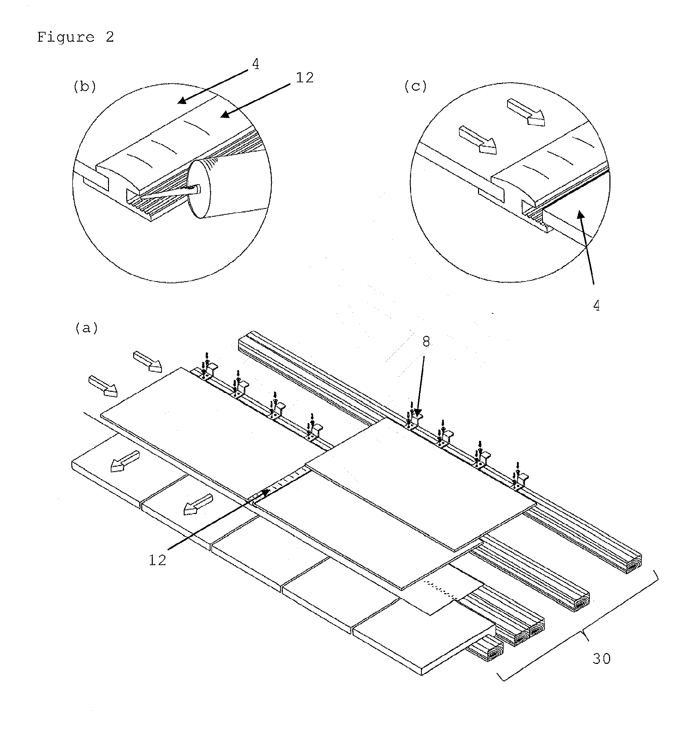

Referring to Figure 2, Figure 2(a) shows first barrier means in the form of an edge seal 12 secured between two adjacent devices 4. Figures 2(b) and 2(c) show the preferred shape of the edge seal 12, and Figure 2(c) demonstrates an attachment of one device to another by means of the edge seal 12.

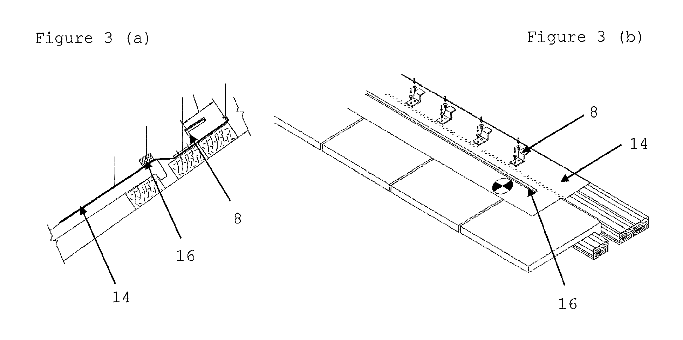

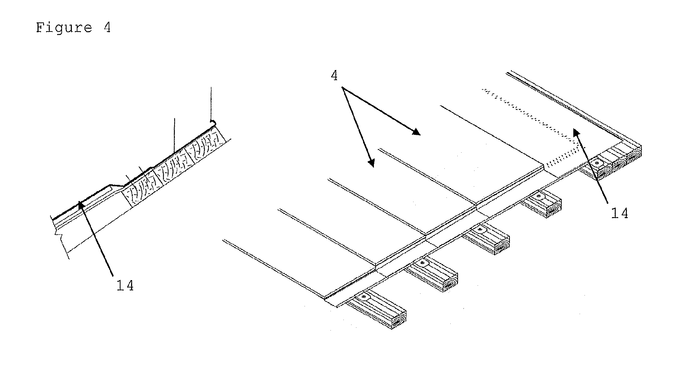

Referring to Figures 3 and 4, second barrier means in the form of flashing 14 and expanding foam tape 16 is shown. Figure 3 shows the attachment of flashing 14 and 16 to a lower portion of the roof, while Figure 4 shows the attachment of flashing 14 to an upper portion of the roof.

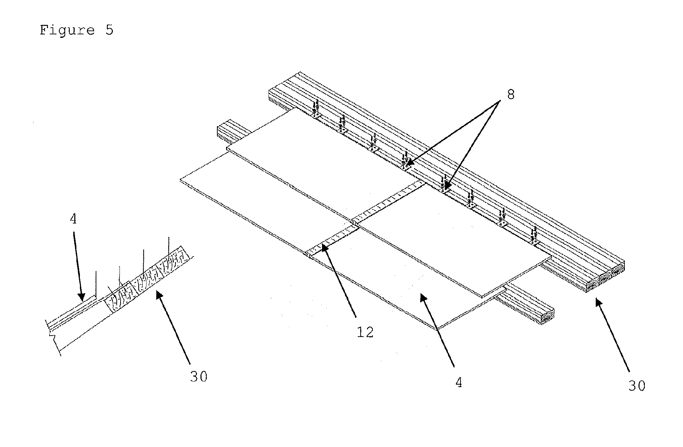

Referring to Figures 3 and 5, second fixing members 8 are shown fixing devices 4 to battens 30. Figure 3 shows fixing members 8 adapted to fix devices 4 to the lower portion of the roof, while Figure 5 shows fixing members 8 adapted to fix devices 4 to the upper portion of the roof.

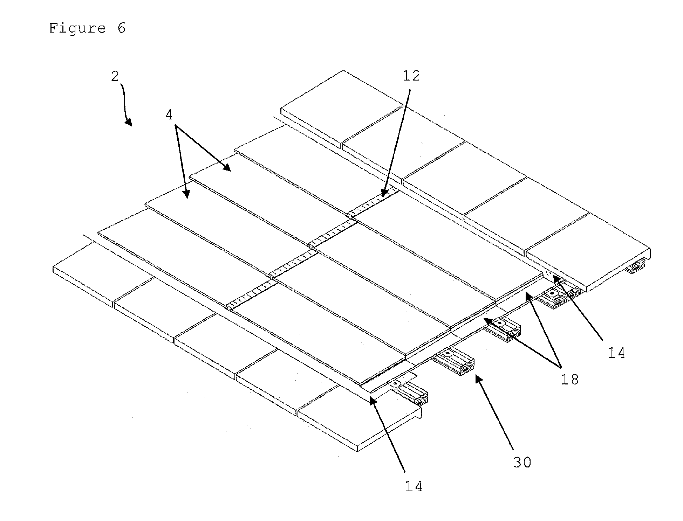

Referring to Figure 6, the completed assembly 2 is shown installed flush with the surface of the roof. Draining means in the form of flashing trays 18, adapted to receive water from the surfaces of the adjacent devices 4 and transport it away, is shown attached to an edge of the assembly 2.

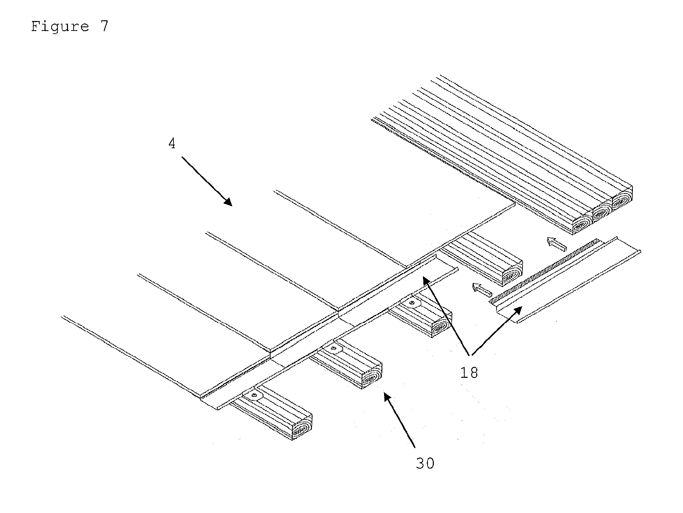

Referring to Figure 7, a detailed view of the flashing trays 18 is provided showing how the flashing trays 18 may be attached to the devices 4.

It will be appreciated by persons skilled in the art that the above embodiment has been described by way of example only, and not in any limitative sense, and that various alterations and modifications are possible without departure from the scope of the invention as defined by the appended claims.

## Claims

1. A photovoltaic assembly (2) comprising:
a plurality of photovoltaic converter devices (4), wherein each said photovoltaic converter device (4) is adapted to receive light and output electrical power; and a plurality of first fixing members (6), wherein each said first fixing member (6) is adapted to be attached to a first said photovoltaic converter device (4), and has a respective first part (8) and a respective second part (10); wherein said first part (8) is adapted to engage a said second part (10) of a further said first fixing member (6) attached to a second said photovoltaic converter device (4) partially overlying said first photovoltaic converter device (4), and said second part (10) is adapted to engage a said first part (8) of a further said first fixing member (6) attached to a third said photovoltaic device (4), wherein said first photovoltaic converter device (4) partially overlies said third photovoltaic converter device (4).

2. An assembly according to claim 1, further comprising first barrier means for preventing passage of water between adjacent said photovoltaic converter devices (4).

3. An assembly according to claim 2, wherein said first barrier means comprises an edge seal (12) adapted to be secured between adjacent said photovoltaic converter devices (4).

4. An assembly according to any one of the preceding claims, further comprising second barrier means for preventing passage of water between said first and second photovoltaic converter devices (4).

5. An assembly according to claim 4, wherein said second barrier means comprises expanding foam tape.

6. An assembly according to any one of the preceding claims, further comprising a plurality of second fixing members (8) adapted to attach at least one said photovoltaic converter device to a support.

7. An assembly according to any one of the preceding claims, further comprising draining means adapted to be attached to at least one edge of said assembly for transporting water away from said assembly.

8. An assembly according to claim 7, wherein said draining means comprises at least one flashing tray (18).
